# EUROPÄISCHE PATENTANMELDUNG

(11) **EP 4 538 944 A1**
(43) Veröffentlichungstag der Anmeldung: **16.04.2025**
(21) Anmeldenummer: 24206131.5
(22) Anmeldetag: 11.10.2024
(51) Int. Cl.: G06Q 10/0833, G08B 13/08, G08B 19/00, G08B 21/18, G07C 9/00

(54) **VERFAHREN ZUM BETREIBEN EINES SYSTEMS ZUM ÜBERWACHEN EINES TRANSPORTBEHÄLTERS FÜR DEN GÜTERTRANSPORT**

(30) Priorität: 13.10.2023 DE 102023128104
(71) Anmelder: Deutsche Post AG, 53113 Bonn (DE); Telic AG, 82041 Oberhaching (DE)
(72) Erfinder: Wahlen, Stephan, 53121 Bonn (DE); Kirst, Andreas, 85551 Kirchheim (DE); Baumann, Stefan, 81547 München (DE)
(74) Vertreter: Michalski Hüttermann & Partner Patentanwälte mbB

(57) **Zusammenfassung**

Die Erfindung betrifft ein System zum Überwachen eines Transportbehälters (1) für den Gütertransport mit einem Tor (2) zum Öffnen und Schließen des Transportbehälters (1), das System aufweisend
eine Sensoreinheit (3) zum Erfassen eines Torstatus, wobei der Torstatus wenigstens einen geöffneten Zustand des Tores (2) und einen geschlossenen Zustand des Tores (2) umfasst,
ein Positionsbestimmungsmodul (4) zum Erfassen eines Standorts des Transportbehälters (1),
ein Kommunikationsmodul (5) zum drahtlosen Übermitteln von Daten umfassend den Torstatus und den Standort des Transportbehälters (1) an eine zentrale Steuereinheit (6), wobei die zentrale Steuereinheit (6) dazu ausgestaltet ist, die Daten vom Kommunikationsmodul (5) zu empfangen und abhängig vom Torstatus und vom Standort des Transportbehälters (1) eine Warnmeldung an einen externen Empfänger (7) zu senden.

Auf diese Weise wird ein System bereitgestellt, mit dem ein Tor (2) des Transportbehälters (1) während des Transports (T) überwacht und unerlaubte Öffnungen (9) erkannt werden können.

## Beschreibung

Die Erfindung betrifft ein Verfahren zum Betreiben eines System zum Überwachen eines Transportbehälters für den Gütertransport mit einem Tor zum Öffnen und Schließen des Transportbehälters, das System aufweisend eine Sensoreinheit zum Erfassen eines Torstatus, wobei der Torstatus wenigstens einen geöffneten Zustand des Tores und einen geschlossenen Zustand des Tores umfasst, ein Positionsbestimmungsmodul zum Erfassen eines Standorts des Transportbehälters, ein Kommunikationsmodul zum drahtlosen Übermitteln von Daten umfassend den Torstatus und den Standort des Transportbehälters an eine zentrale Steuereinheit.

Als Gütertransport wird im Verkehrswesen der außerbetriebliche Transport von Gütern auf den Transport- und Verkehrswegen Straße, Schiene, Wasser und Luft bezeichnet. Die Güter werden in der Regel in großen Transportbehältnissen wie beispielsweise Containern transportiert. Die weit verbreitete Weise ist der Container als Wechselbrücke auf Sattelschleppern. Eine Wechselbrücke oder Wechselaufbaubrücke (WAB) ist ein austauschbarer Ladungsträger, der von dem Trägerfahrzeug unterfahren oder gekrant wird und sich ebenso trennen lässt. Wechselbehälter sind die heute am häufigsten eingesetzten Transporttechnik für den kontinental-europäischen kombinierten Verkehr.

Häufig kommt es während des Transports zu Diebstählen oder Beschädigungen der Güter. Diese können entweder durch den Fahrer selbst oder durch Dritte, beispielsweise während vorgeschriebener Pausen auf Rastplätzen oder -höfen, verursacht werden. Fehlende oder beschädigte Güter stellen einen enormen Schaden dar und können häufig nicht zurückverfolgt werden. Doch sowohl Diebstähle als auch Beschädigungen gehen mit derselben Voraussetzung einher, nämlich dem unerlaubten Öffnen des Transportbehälters.

Im Idealfall wird der Transportbehälter an dem Startpunkt vorschriftsmäßig beladen, verschlossen und erst am Zielpunkt wieder geöffnet und entladen. Es ist daher erforderlich, dass unerlaubte Öffnungen des Transportbehälters erkannt werden, um mögliche Diebstähle oder Beschädigungen der Güter nachhalten zu können. Eine entsprechende Funktion kann ebenfalls als Abschreckung dienen und Diebstähle oder Beschädigung vorbeugen.

Die aus dem Stand der Technik bekannten Vorrichtungen oder Verfahren erlauben es bisher noch nicht, unerlaubte Öffnungen eines Transportbehälters während des Transports zu erkennen.

Davon ausgehend ist es die Aufgabe der Erfindung, ein System und Verfahren bereitzustellen, mit dem ein Tor des Transportbehälters während des Transports überwacht werden und unerlaubte Öffnungen erkannt werden können.

Diese Aufgabe wird durch den Gegenstand des Patentanspruchs 1 gelöst. Bevorzugte Weiterbildungen finden sich in den Unteransprüchen.

Erfindungsgemäß ist somit ein System zum Überwachen eines Transportbehälters für den Gütertransport mit einem Tor zum Öffnen und Schließen des Transportbehälters, das System aufweisend
eine Sensoreinheit zum Erfassen eines Torstatus, wobei der Torstatus wenigstens einen geöffneten Zustand des Tores und einen geschlossenen Zustand des Tores umfasst,
ein Positionsbestimmungsmodul zum Erfassen eines Standorts des Transportbehälters,
ein Kommunikationsmodul zum drahtlosen Übermitteln von Daten umfassend den Torstatus und den Standort des Transportbehälters an eine zentrale Steuereinheit, wobei die zentrale Steuereinheit dazu ausgestaltet ist, die Daten vom Kommunikationsmodul zu empfangen und abhängig vom Torstatus und vom Standort des Transportbehälters eine Warnmeldung an einen externen Empfänger zu senden.

Als "Transportbehälter" wird vorliegend jeder Transportbehälter verstanden, der für den Gütertransport geeignet ist. Dazu zählen insbesondere Container, Großraumbehälter, Wechselbrücken und/oder Wechselaufbaubrücken. Der Transportbehälter verfügt über ein Tor, mit dem ein Zugang zu dem Transportbehälter ermöglicht wird. Als Tor wird insbesondere ein Schwenktor, ein Rolltor, eine Tür oder eine Plane, die an einer vorbestimmten Stelle geöffnet werden kann, verstanden.

Als "Positionsbestimmungsmodul" wird insbesondere ein GNSS-Modul verstanden. "GNSS" ist die Abkürzung für das englische "global navigation satellite system" und bezeichnet ein globales Navigationssatellitensystem zur Positionsbestimmung und Navigation auf der Erde und in der Luft durch den Empfang der Signale von Navigationssatelliten und Pseudoliten. GNSS ist ein Sammelbegriff für die Verwendung bestehender und künftiger globaler Satellitensysteme wie beispielsweise NAVSTAR GPS der Vereinigten Staaten von Amerika, GLONASS der Russischen Föderation, GALILEO der Europäischen Union oder BEIDOU der Volksrepublik China, sowie verschiedene Ergänzungssysteme Europas, der USA, Japans und Indiens. Die zentrale Steuereinheit stellt eine Verbindungseinheit zwischen dem Positionsbestimmungsmodul bzw. dem Kommunikationsmodul und dem externen Empfänger dar.

Es ist somit ein maßgeblicher Punkt der Erfindung, dass mittels des Systems nicht nur Toröffnungen erkannt, sondern dass der Torstatus auch in Kombination mit dem Standort des Transportbehälters erfasst und ausgewertet werden kann. Abhängig von diesen zwei wesentlichen Informationen, nämlich dem Torstatus und dem Standort, können dann weitere Aktionen ausgeführt werden, wie insbesondere einen externen Empfänger benachrichtigen, dass und wo der Transportbehälter unerlaubt geöffnet wurde.

Informationen über den Torstatus werden insbesondere mittels zyklischen Advertising Daten in die nähere Umgebung gesendet. Das Kommunikationsmodul empfängt die Daten in regelmäßigen Abständen und sendet sie an die zentrale Steuereinheit, die die relevanten Informationen ausliest und eine Warnmeldung ausgeben kann.

Zu den übermittelten Daten zählen neben dem Torstatus "geöffnet" oder "geschlossen" vorzugweise ein Zählerwert der Anzahl der Toröffnungen angibt. Ohne die Bereitstellung und die Auswertung des Zahlenwerts können kurze Öffnungen des Tores nicht erkannt werden. Dieser Zählerwert ermöglicht es, bei Erfassung der Advertising Daten in größeren Zeitabständen (z.B. 2 - 3 Minuten) ein kurzes Öffnen des Rolltors in dem Zeitraum zwischen dem Erfassen der Advertising Daten zu erkennen.

Die Sensoreinheit weist vorzugsweise zwei Komponenten auf, nämlich einen Magnetsensor und einen Magneten als entsprechendes Gegenstück. Die Sensoreinheit wird mittels Bluetooth-Low-Energy (BLE)-Standard betrieben. Der Magnetsensor und der Magnet werden derart angebracht, dass im geschlossenen Zustand des Tores der Magnet auf Höhe des Magnetsensors angeordnet ist. Wird das Tor geöffnet, verändert sich die Position des Magneten in der Form, dass er sich von dem Magnetsensor entfernt, bis er sich außerhalb der Erkennungszone des Magnetsensors befindet, sodass die Öffnung des Tores erfasst werden kann. Bluetooth Low Energy (BLE) ist eine Funktechnik, mit der sich Geräte in einer Umgebung von etwa 10 bis 20 Metern vernetzen lassen. Im Vergleich zu Kommunikationssystemen mit einer ähnlichen Senderreichweite ohne BLE hat BLE einen deutlich geringeren Stromverbrauch und verursacht geringere Kosten.

Gemäß einer bevorzugten Weiterbildung der Erfindung ist die Sensoreinheit dazu ausgestaltet, den Torstatus drahtlos an das Positionsbestimmungsmodul zu senden. Der Torstatus wird dabei vorzugsweise via Bluetooth übermittelt. Gemäß einer bevorzugten Weiterbildung der Erfindung umfasst das Positionsbestimmungsmodul das Kommunikationsmodul und ist dazu ausgestaltet, die Daten vorzugsweise via Mobilfunk an die zentrale Steuereinheit zu übermitteln. Der Aufbau ist folglich derart gewählt, dass das Kommunikationsmodul im Positionsbestimmungsmodul integriert ist. Die Sensordaten, also der Torstatus, werden an das Positionsbestimmungsmodul gesendet. Die Sensordaten werden mit über GNSS erfassten aktuellen Positionsdaten angereichert und über Mobilfunknetze, bevorzugt öffentliche Mobilfunknetze, an die zentrale Steuereinheit und somit an das Logistikzentrum übermittelt. Die zentrale Steuereinheit kann beispielsweise in einem Logistikzentrum fernab des Transportweges stehen und die Daten empfangen.

Erfindungsgemäß ist weiterhin ein Verfahren zum Betreiben eines oben beschriebenen Systems mit den folgenden Verfahrensschritten vorgesehen:
vorab Definieren wenigstens einer nicht-überwachten geolokalisierten Zone;
Erfassen des Torstatus mittels der Sensoreinheit in regelmäßigen Zeitabständen,
Erfassen des Standorts des Transportbehälters mittels des Positionsbestimmungsmoduls in regelmäßigen Zeitabständen,
wenn das Tor als geöffnet erfasst wurde und der Standort des Transportbehälters außerhalb der nicht-überwachten geolokalisierten Zone erfasst wurde, dann Senden einer Warnmeldung an den externen Empfänger mittels der zentralen Steuereinheit.

Es ist also ein maßgeblicher Punkt der Erfindung, dass sogenannte geo-lokalisierte Zonen definiert werden, in denen keine Überwachung des Torstatus erfolgen soll. Dazu zählen insbesondere der Startort und/oder der Zielort, an denen der Transportbehälter zum Be- und/oder Entladen geöffnet werden darf. In diesen Zonen ist eine Überwachung des Torstatus nicht erwünscht. Dementsprechend werden im Umkehrschluss nur solche Toröffnungen gemeldet, die außerhalb der nicht-überwachten Zonen stattfinden, also insbesondere zwischen Start- und Zielort, nämlich während des Transports.

Wird eine Toröffnung erkannt, und befindet sich der Transportbehälter außerhalb der nicht-überwachten Zone, übermittelt das Kommunikationsmodul die Daten an die zentrale Steuereinheit, die die relevanten Informationen ausliest und eine Warnmeldung ausgibt.

Zu den übermittelten Daten zählen neben dem Torstatus "geöffnet" oder "geschlossen" vorzugweise ein Zählerwert der Anzahl der Toröffnungen angibt. Ohne die Bereitstellung und die Auswertung des Zählerwerts können kurze Öffnungen des Tores nicht erkannt werden. Dieser Zählerwert ermöglicht es, bei Erfassung der Daten in größeren Zeitabständen (z.B. 2 - 3 Minuten) ein kurzes Öffnen des Rolltors in dem Zeitraum zwischen dem Erfassen der Daten zu erkennen.

Eine Veränderung des Torstatus kann vorzugsweise auf zwei Arten ermittelt werden: Erstes kann die Veränderung des Torstatus über einen veränderten Zählerwert bei scheinbar unverändertem Torstatus erfasst werden. Zweitens kann die Veränderung des Torstatus über den Torstatus selbst erfasst werden. Dies erfolgt insbesondere dann, wenn sich der Torstatus, beispielsweise von "geschlossen" zu "geöffnet", seit dem letzten Übermitteln der Daten ändert.

Das Definieren von geo-lokalisierten Zonen und erfassen eines Standorts ermöglicht insbesondere das automatisierte Auslösen einer Aktion durch das Überschreiten einer geolokalisierten Begrenzung auf der Erdoberfläche oder in der Luft. Dies wird auch Geofencing genannt. In den meisten Fällen definiert die Begrenzung eine geschlossene Fläche, so dass zwischen innen und außen unterschieden werden kann. Vorzugsweise ist vorgesehen, dass beim Eintritt oder beim Austritt des Transportbehälters in die bzw. aus der nicht-überwachten Zone eine Mitteilung an die zentrale Steuereinheit gesendet wird. Bevorzugt ist vorgesehen, dass der Austritt des Transportbehälters aus der geolokalisierten Zone das erfindungsgemäße System und Verfahren startet bzw. auslöst und/oder dass der Eintritt des Transportbehälters in die geolokalisierte Zone das erfindungsgemäße System und Verfahren beendet bzw. stoppt.

Gemäß einer bevorzugten Weiterbildung der Erfindung wird das Tor als geöffnet erfasst, wenn das Maß der Öffnung einen vorbestimmten Grenzwert überschreitet und als geschlossen erfasst, wenn das Maß der Öffnung den vorbestimmten Grenzwert unterschreitet. Mit "vorbestimmtes Maß" ist insbesondere ein Grenzwert gemeint. Beispielsweise gilt ein Rolltor als geöffnet, wenn die Öffnung mehr als 5 cm beträgt. Ein Schwenktor gilt beispielsweise als geöffnet, wenn die Öffnung mehr als 5° beträgt. Die Tore gelten jeweils als geschlossen, wenn die jeweiligen Grenzwerte unterschritten werden.

Gemäß einer bevorzugten Weiterbildung der Erfindung umfasst das Verfahren folgenden weiteren Verfahrensschritt:
wenn das Tor als geöffnet erfasst wurde, dann Übermitteln des Torstatus und des Standorts des Transportbehälters an die zentrale Steuereinheit.

Die Übermittlung des Torstatus als Datenpaar zusammen mit dem Standort wird vorzugsweise unabhängig vom Standort des Transportbehälters übertragen. Jede Änderung des Torstatus wird zusammen mit dem jeweiligen Standort übermittelt. Die Übermittlung erfolgt im Rahmen des Push-Modells. Das bedeutet, dass bei einer Änderung des Torstatus die Daten, also der Torstatus und der zeitlich zugeordnete Standort, automatisch an die zentrale Steuereinheit übermittelt werden. Erst dann kann entschieden werden, ob eine Warnmeldung erforderlich ist. Eine Warnmeldung ist insbesondere dann erforderlich, wenn der Standort des Transportbehälters zum Zeitpunkt der Toröffnung außerhalb der nicht-überwachten Zone stattgefunden hat. Diese Auswertung erfolgt mittels der zentralen Steuereinheit.

Sollte bereits ein Standort unmittelbar oder in einem vorbestimmten Toleranzbereich vor dem Erkennen einer Toröffnung bekannt sein, beispielsweise weil die Position des Transportbehälters bei einem Stillstand des Fahrzeugs übermittelt wurde, so kann dem Event der Toröffnung dieser Standort zugeordnet werden, sodass keine neue Standortbestimmung durchgeführt werden muss. Anderenfalls wird nach dem Erkennen einer Toröffnung vorzugsweise zunächst für einen vorbestimmten Zeitraum, beispielsweise eine Minute, versucht, einen aktuellen Standort zu erfassen, die dem Event der Toröffnung zugeordnet werden kann. Ist das nicht möglich, so wird der zuletzt bekannte Standort zugeordnet.

Wenn nach einer Veränderung des Torstatus keine Datenverbindung möglich ist, werden die Daten insbesondere zwischengespeichert. Bei der nächsten Datenübertragung wird die gespeicherte Meldung über die Veränderung des Torstatus nachgeliefert.

Gemäß einer bevorzugten Weiterbildung der Erfindung umfasst das Verfahren folgenden weiteren Verfahrensschritt:
Übermitteln des Torstatus und des Standorts des Transportbehälters an eine zentrale Steuereinheit in regelmäßigen Zeitabständen.

Ergänzend oder alternativ zum Push-Modell können die Daten auch in regelmäßigen Zeitabständen abgefragt werden. Dies geschieht im Rahmen des Pull-Modells. So können der Torstatus zusammen mit dem Standort des Transportbehälters beispielsweise alle 10 Minuten abgefragt werden und dienen unabhängig von dem Standort des Transportbehälters zusätzlich zum Nachweis des Transports, auch wenn keine unerlaubte Toröffnung erkannt wurde.

Gemäß einer bevorzugten Weiterbildung der Erfindung, werden der Torstatus und/oder der Standort des Transportbehälters jeweils als Datenpaar mit einem Zeitstempel übermittelt. Der Zeitstempel dient dazu, ein Ereignis einem eindeutigen Zeitpunkt zuzuordnen. Jede Messung des Torstatus und/oder des Standorts des Transportmittels können somit einem eindeutigen Zeitpunkt zugeordnet werden, sodass die ermittelten Daten in chronologischer Reihenfolge nachvollzogen werden können und somit ein Transportverlauf rekonstruiert werden kann. Besonders bevorzugt ist vorgesehen, dass dem Transportbehälter eine Identifikationsnummer zugeordnet ist, die zusammen mit dem Torstatus und/oder dem Standort des Transportbehälters an die zentrale Steuereinheit übermittelt wird. Werden von der zentralen Steuereinheit mehrere Transportbehälter gleichzeitig überwacht, können die Events den einzelnen Transportbehältern eindeutig zugeordnet werden.

Der Nachweis, wo, wann und wie lange ein Tor geöffnet wurde ist insbesondere wichtig für Versicherungsansprüche im Falle eines Diebstahls und/oder als Kundennachweis, dass der Transport ordnungsgemäß, also ohne unautorisierte Öffnung, durchgeführt worden ist.

Gemäß einer bevorzugten Weiterbildung der Erfindung umfasst das Verfahren folgende weitere Verfahrensschritte:
vorab Definieren einer Startzeit und einer Zielzeit für den Transport des Transportbehälters, und
Übermitteln des Torstatus und/oder des Standorts des Transportbehälters und/oder Senden einer Warnmeldung, wenn der jeweilige Zeitstempel zwischen Start- und Zielzeit liegt.

Das Verfahren kann nicht nur über den Standort des Transportbehälters gesteuert, sondern auch über die Zeit, insbesondere die Uhrzeit, gesteuert werden. Werden vorab eine Start- und eine Zielzeit festgelegt, können Daten und/oder Meldungen nur innerhalb dieses Zeitfensters übermittelt werden. Da die zuvor festgelegten Start- und/oder Zielzeiten in der Praxis selten exakt eingehalten werden können, beispielsweise durch Verzögerungen in der Abfertigung und durch Behinderungen auf den Transportwegen, können die Start- und/oder Zielzeiten vorzugsweise Toleranzen umfassen. Fernen können bevorzugt live-Verkehrsdaten berücksichtigt werden, sodass zumindest die Zielzeit während des Transports laufend angepasst werden kann.

Erfindungsgemäß ist weiterhin eine Verwendung eines oben beschriebenen Systems zum Durchführen eines oben beschriebenen Verfahrens zum Überwachen eines Torstatus eines Transportbehälters während eines Transports vorgesehen.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: schematisch einen Transportbehälter mit einem System zum Überwachen des Transportbehälters gemäß einem bevorzugten Ausführungsbeispiel der Erfindung in einer Seitenansicht,
- Fig. 2: schematisch einen Transportbehälter mit einem System zum Überwachen des Transportbehälters gemäß einem bevorzugten Ausführungsbeispiel der Erfindung in einer Frontalansicht,
- Fig. 3: schematisch ein Anwendungsbeispiel des Systems zum Überwachen eines Transportbehälters gemäß einem bevorzugten Ausführungsbeispiel der Erfindung,
- Fig. 4: schematisch ein Verfahren zum Überwachen eines Transportbehälters gemäß einem bevorzugten Ausführungsbeispiel der Erfindung in einem Flussdiagramm.

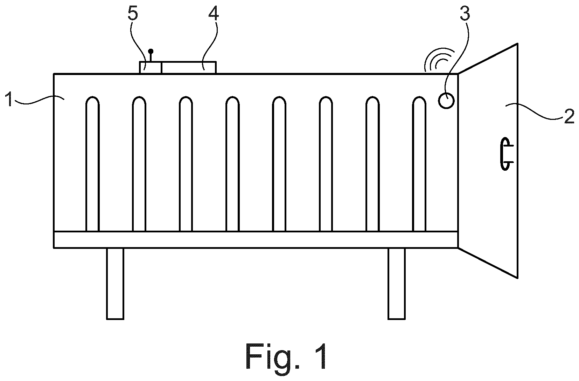

In Figur 1 ist schematisch ein Transportbehälter 1 mit einem System zum Überwachen des Transportbehälters 1 gemäß einem bevorzugten Ausführungsbeispiel der Erfindung in einer Seitenansicht gezeigt. Der Transportbehälter 1, hier in Form einer Wechselbrücke, hat an einer Seite ein Tor 2, über das der Innenraum des Transportbehälters 1 zugänglich ist. Das System zum Überwachen des Transportbehälters 1 besteht aus einer Sensoreinheit 3 und einem Positionsbestimmungsmodul 4 mit integriertem Kommunikationsmodul 5. Folglich kann jeder beliebige Transportbehälter 1 mit dem System nachgerüstet werden. Die Sensoreinheit 3 wird dazu einfach an dem Tor 2 angeordnet. Das Positionsbestimmungsmodul 4 kann an einer beliebigen Stelle angeordnet werden. Die Anordnung auf dem Dach, wie in Fig. 1 gezeigt, hat den Vorteil, dass das Positionsbestimmungsmodul 4 für die Energieversorgung ein Solarmodul aufweisen kann. Das Positionsbestimmungsmodul 4 kann sich somit während des Betriebs selbst mit Strom versorgen. Die Sensoreinheit 3 und das Positionsbestimmungsmodul 4 können an unterschiedlichen Stellen an dem Transportbehälter 1 befestigt werden, weil die Sensoreinheit 3 drahtlos mit dem Positionsbestimmungsmodul 4 beziehungsweise mit dem Kommunikationsmodul 3 kommunizieren kann. Die Sensoreinheit sendet die Daten, also den Torstatus, via Bluetooth an das Positionsbestimmungsmodul 4. Die Reichweite zum Senden der Daten beträgt insbesondere 10 bis 20 Meter, sodass das Positionsbestimmungsmodul 4 beispielsweise an einem Ende des Transportbehälters 1 und die Sensoreinheit 3 an dem anderen Ende des Transportbehälters 1 angeordnet sein können.

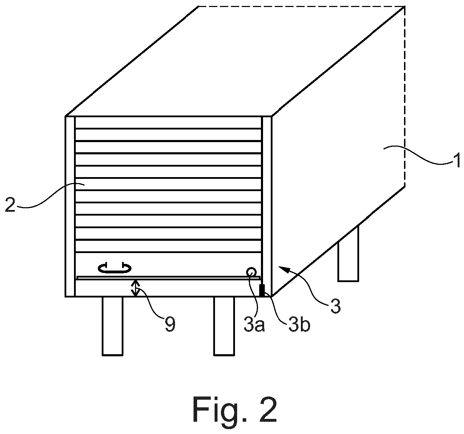

In Figur 2 ist ein Transportbehälter 1 in einer frontalen Ansicht auf das Tor 2 ersichtlich. Tor 2 ist die Sensoreinheit 3 angeordnet, die den Torstatus erkennen kann. Die Sensoreinheit 3 umfasst einen Magneten 3a und einen Magnetsensor 3b, die im geschlossenen Zustand des Tores 2 auf derselben Höhe positioniert sind. In Figur 2 ist das Tor 2 geöffnet, so dass der Magnet 3a und der Magnetsensor 3b versetzt zueinanderstehen und der Torstatus als "geöffnet" erkannt wird. Der Torstatus wird nur dann als "geöffnet" erkannt, wenn die Öffnung 9 einen vorbestimmten Grenzwert überschreitet. Auf diese Weise kann ausgeschlossen werden, das kleinste Öffnungen, die keinen Zugang zu dem Transportbehälter 1 ermöglichen, als "geöffnet" erkannt werden.

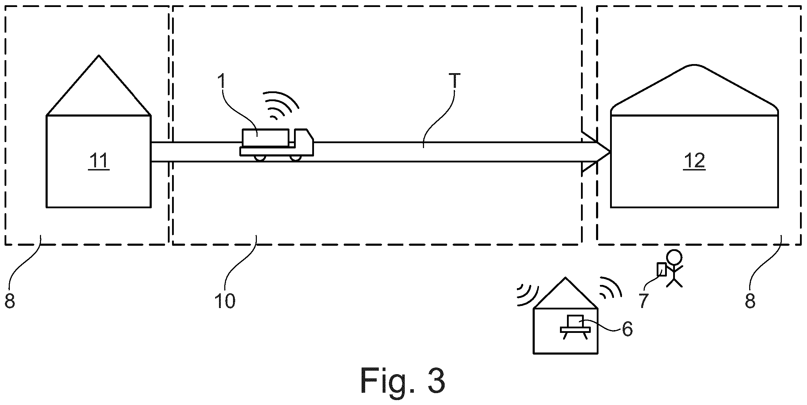

Die Figur 3 zeigt ein Anwendungsbeispiel des Systems zum Überwachen des Transportbehälters 1. Der Transportbehälter 1 wird von dem Startpunkt 11 zu dem Zielpunkt 12 transportiert. Der Startpunkt 11 und der Zielpunkt 12 werden als nicht-überwachte Zone 8 definiert. Zwischen dem Startpunkt 11 und dem Zielpunkt 12 befindet sich im Umkehrschluss die überwachte Zone 10. Nur in dieser überwachten Zone 10 wird eine Öffnung des Tores 2 als kritisch bewertet. Befindet sich der Transportbehälter 1 in der überwachten Zone 10 und wird das Tor 2 als "geöffnet" erkannt, wird eine Warnmeldung an einen externen Empfänger 7 gesendet. Dazu werden der Torstatus und der Standort des Transportbehälters 1 an eine zentrale Steuereinheit 6 übermittelt, die die Daten auswertet.

Während des Transports T können die Daten, also der Torstatus und die Position des Transportbehälters 1, laufend verfolgt werden, indem sie entweder in Rahmen eines Pull-Modus angefragt werden und/oder im Rahmen eines Push-Modus bei Änderungen eines Zustands an die zentrale Steuereinheit 6 aktiv gesendet werden. Unabhängig von dem Standort des Transportbehälters 1 können somit sämtliche Öffnungen des Tores 2 gemeldet werden. Ob eine Warnmeldung tatsächlich ausgegeben werden muss, wird durch Auswertung der Daten von der zentralen Steuereinheit 6 entschieden. Zudem ist es auch möglich den Standort des Transportbehälters 1 in regelmäßigen Zeitabständen abzufragen und somit den Transport zu verfolgen.

Der externe Empfänger 7 kann, wie in Figur 3 dargestellt, eine unbeteiligte dritte Person oder eine Einrichtung sein. Es ist jedoch auch möglich, dass der Fahrer des Transportfahrzeugs der externe Empfänger 7 ist. In diesem Fall kann der Fahrer selbst bei einer unerlaubten Öffnung des Tores 2 den Transportbehälter 1 begutachten.

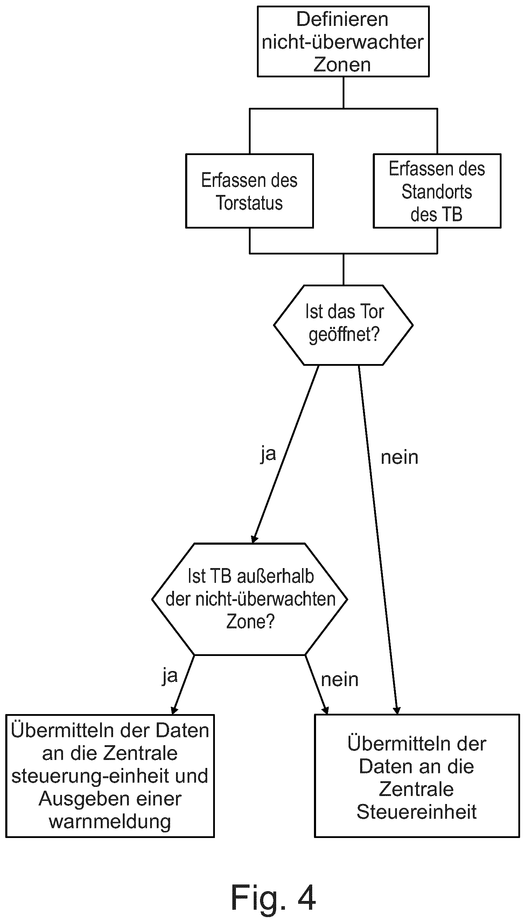

Die Figur 4 zeigt schematisch ein Verfahren zum Überwachen eines Transportbehälters 1 gemäß einem bevorzugten Ausführungsbeispiel der Erfindung. In einem ersten Schritt werden nicht-überwachte Zonen definiert. In diesen nicht-überwachten Zonen werden Öffnungen des Tores 2 als nicht kritisch betrachtet. Die nicht-überwachten Zonen sind beispielsweise der Startpunkt 11, an dem der Transportbehälter 1 beladen wird, und der Zielpunkt 12, an dem der Transportbehälter entladen wird. Die nicht-überwachten Zonen werden als vorbereitender Schritt vor dem Transport des Transportbehälters 1 definiert. Während des Transports t wird der Torstatus und der Standort des Transportbehälters 1 erfasst. Wird das Tor als "geschlossen " erkannt, wird der Standort und der Torstatus zur Dokumentation an die zentrale Steuereinheit 6 übermittelt. Wird das Tor jedoch als "geöffnet" erkannt, wird geprüft, ob sich der Transportbehälter 1 außerhalb der nicht-überwachten Zone befindet. Befindet sich der Transportbehälter 1 außerhalb der nicht-überwachten Zone, werden nicht nur die Daten bestehend aus dem Torstatus und dem Standort des Transportbehälters 1 an die zentrale Steuereinheit 6 übermittelt, sondern es wird auch eine Warnmeldung an eine externe Empfänger 7 gesendet. Es ist somit ein maßgeblicher Punkt, dass nur dann eine Warnmeldung an den externen Empfänger 7 gesendet wird, wenn der Transportbehälter 1 außerhalb der nicht-überwachten Zone 8 und das Tor als "geöffnet" erkannt wurde. Auf diese Weise werden unerlaubte Öffnungen während des Transports T zwischen dem Startpunkt 11 und dem Zielpunkt 12 gemeldet.

Der Torstatus und der Standort des Transportbehälters 1 werden jeweils mit einem Zeitstempel übermittelt. Mit Hilfe des Zeitstempels können die Ereignisse während des Transports T in chronologischer Reihenfolge nachvollzogen werden. Ein derartiges Protokoll kann beispielsweise einem Kunden bereitgestellt werden. Der Nachweis, wo, wann und wie lange ein Tor geöffnet wurde, ist insbesondere auch für Versicherungsansprüche im Falle eines Diebstahls oder einer Beschädigung ausschlaggebend.

### Bezugszeichenliste

- 1: Transportbehälter (TB)
- 2: Tor
- 3: Sensoreinheit
- 3a: Magnet
- 3b: Magnetsensor
- 4: Positionsbestimmungsmodul
- 5: Kommunikationsmodul
- 6: zentrale Steuereinheit
- 7: externer Empfänger
- 8: nicht-überwachte geolokalisierte Zone
- 9: Öffnung
- 10: überwachte Zone
- 11: Startpunkt
- 12: Zielpunkt
- T: Transport(weg)

## Patentansprüche

1. Verfahren zum Betreiben eines Systems zum Überwachen eines Transportbehälters (1) für den Gütertransport mit einem Tor (2) zum Öffnen und Schließen des Transportbehälters (1), das System aufweisend
eine Sensoreinheit (3) zum Erfassen eines Torstatus, wobei der Torstatus wenigstens einen geöffneten Zustand des Tores (2) und einen geschlossenen Zustand des Tores (2) umfasst,
ein Positionsbestimmungsmodul (4) zum Erfassen eines Standorts des Transportbehälters (1),
ein Kommunikationsmodul (5) zum drahtlosen Übermitteln von Daten umfassend den Torstatus und den Standort des Transportbehälters (1) an eine zentrale Steuereinheit (6), wobei die zentrale Steuereinheit (6) dazu ausgestaltet ist, die Daten vom Kommunikationsmodul (5) zu empfangen und abhängig vom Torstatus und vom Standort des Transportbehälters (1) eine Warnmeldung an einen externen Empfänger (7) zu senden, mit den folgenden Verfahrensschritten:
vorab Definieren wenigstens einer nicht-überwachten geolokalisierten Zone (8); vorab Definieren einer Startzeit und einer Zielzeit für den Transport (T) des Transportbehälters (1),
Erfassen des Torstatus mittels der Sensoreinheit (3) in regelmäßigen Zeitabständen,
Erfassen des Standorts des Transportbehälters (1) mittels des Positionsbestimmungsmoduls (4) in regelmäßigen Zeitabständen, wobei der Torstatus und/oder der Standort des Transportbehälters (1) jeweils als Datenpaar mit einem Zeitstempel übermittelt werden, und
wenn das Tor als geöffnet erfasst wurde und der Standort des Transportbehälters (1) außerhalb der nicht-überwachten geolokalisierten Zone (8) erfasst wurde und der jeweilige Zeitstempel zwischen Start- und Zielzeit liegt, dann Senden einer Warnmeldung an den externen Empfänger (7) mittels der zentralen Steuereinheit (6).

2. Verfahren nach Anspruch 1, wobei die Sensoreinheit (3) dazu ausgestaltet ist, den Torstatus drahtlos an das Positionsbestimmungsmodul (4) zu senden.

3. Verfahren nach einem der vorhergehenden Ansprüche, wobei das Positionsbestimmungsmodul (4) das Kommunikationsmodul (5) umfasst und dazu ausgestaltet ist, die Daten über ein Mobilfunknetz an die zentrale Steuereinheit (6) zu übermitteln.

4. Verfahren nach einem der vorhergehenden Ansprüche, wobei das Tor (2) als geöffnet erfasst wird, wenn das Maß der Öffnung (9) einen vorbestimmten Grenzwert überschreitet und das Tor (2) als geschlossen erfasst wird, wenn das Maß der Öffnung (9) den vorbestimmten Grenzwert unterschreitet.

5. Verfahren nach einem der vorhergehenden Ansprüche, mit folgendem weiteren Verfahrensschritt:
wenn das Tor (2) als geöffnet erfasst wurde, dann Übermitteln des Torstatus und des Standorts des Transportbehälters (1) an die zentrale Steuereinheit (6).

6. Verfahren nach einem der vorhergehenden Ansprüche, mit folgendem weiteren Verfahrensschritt:
Übermitteln des Torstatus und des Standorts des Transportbehälters (1) an eine zentrale Steuereinheit (6) in regelmäßigen Zeitabständen.

7. Verfahren nach einem der vorhergehenden Ansprüche, wobei der Torstatus und/oder der Standort des Transportbehälters (1) jeweils als Datenpaar mit einem Zeitstempel übermittelt werden.

8. Verfahren nach dem vorhergehenden Anspruch, mit folgenden weiteren Verfahrensschritten:
vorab Definieren einer Startzeit und einer Zielzeit für den Transport (T) des Transportbehälters (1), und
Übermitteln des Torstatus und/oder des Standorts des Transportbehälters (1) und/oder Senden einer Warnmeldung, wenn der jeweilige Zeitstempel zwischen Start- und Zielzeit liegt.

9. Verwendung eines eines Verfahrens nach einem der vorhergehenden Ansprüche zum Überwachen eines Torstatus eines Transportbehälters (1) während eines Transports (T).
